# EUROPÄISCHE PATENTSCHRIFT

(11) **EP 2 364 583 B1**
(45) Veröffentlichungstag und Bekanntmachung des Hinweises auf die Patenterteilung: **25.12.2013**
(21) Anmeldenummer: 11401034.1
(22) Anmeldetag: 28.02.2011
(51) Int. Cl.: A01C 15/00, A01C 17/00

(54) **Landwirtschaftliche Verteilmaschine**
Agricultural spreader
Machine de répartition agricole

(30) Priorität: 09.03.2010 DE 102010015863
(43) Veröffentlichungstag der Anmeldung: 14.09.2011
(73) Patentinhaber: Amazonen-Werke H. Dreyer GmbH & Co. KG, 49205 Hasbergen (DE)
(72) Erfinder: Behnert, Dominik, 49078, Osnabrück (DE)

(56) Entgegenhaltungen:
- EP-A1- 1 849 345
- EP-A1- 2 232 975
- DE-U1-202008 013 948
- US-B1- 7 467 591

## Beschreibung

Die Erfindung betrifft eine landwirtschaftliche Verteilmaschine gemäß des Oberbegriffes des Patentanspruches 1.

Eine derartige landwirtschaftliche Verteilmaschine wird beispielsweise durch die EP 1 849 345 B1 bekannt. Diese landwirtschaftliche Verteilmaschine ist als Zentrifugaldüngerstreuer ausgebildet und weist einen Rahmen und Vorratsbehälter mit zumindest einer oberen als Befülleinrichtung dienen Behälteröffnung auf. In den seitlichen, die Maschine verkleidende Wänden sind mehrere Aufstiegsstufen einer Aufstiegseinrichtung angeordnet. Eine derartige Anordnung lässt sich nur verwirklichen, wenn die Verteilmaschine zusätzliche seitliche Wände aufweist.

Durch die EP 1 504 644 B1 ist eine weitere als Zentrifugaldüngerstreuer ausgebildete Verteilmaschine bekannt geworden. Diese Verteilmaschine weist einen Vorratsbehälter mit einem Schutzbügel auf. Ein Teil des Schutzbügels wird von einem in eine liegende Position bringbaren Leiterelement gebildet, welches zum Befüllen der Maschine in eine aufrechte Aufstiegsposition bringbar ist.

Hier ist es erforderlich, dass das Leiterelement jeweils in einen separaten Arbeitsgang umstellt werden muss.

Der Erfindung liegt die Aufgabe zugrunde, eine einfachere Ausgestaltung eines Leiterelementes zu schaffen, welches einfach in seine Aufstiegsposition bringbar ist.

Diese Aufgabe wird erfindungsgemäß dadurch gelöst, dass dem Vorratsbehälter zumindest eine Abdeckvorrichtung zur Abdeckung der Behälteröffnung zugeordnet ist, dass an der Abdeckeinrichtung mehrere Aufstiegsstufen der Aufstiegsvorrichtung angeordnet sind, dass die Abdeckvorrichtung mit den Aufstiegsstufen aus der die Behälteröffnung deckenden Position in eine aufrechte Aufstiegsposition für die Aufstiegsvorrichtung und umgekehrt bringbar ist. Infolge dieser Maßnahmen wird durch das Öffnen der Behälteröffnung durch Verbringen der Abdeckvorrichtung aus der Abdeckposition in die Befüllposition automatisch die Aufstiegsvorrichtung in die Aufstiegsposition gebracht. Es lässt sich diese Aufstiegsvorrichtung bei allen Verteilmaschinen verwirklichen, welche mit einer Abdeckvorrichtung für die Behälteröffnung erforderlich ist und bei denen die Abdeckvorrichtung der Position des Abdeckens der Behälteröffnung zum Befüllen des Vorratsbehälters in eine die Behälteröffnung freigebende Position gebracht werden muss. Somit wird also durch das Verbringen der Abdeckvorrichtung aus der Abdeckposition in die Befüllposition automatisch die Aufstiegsvorrichtung in die Aufstiegsposition verbracht.

In einfacher Weise lässt sich die Aufstiegsvorrichtung in die Abdeckvorrichtung dadurch integrieren, dass die Abdeckeinrichtung als Formteil ausgebildet ist, dass in dem Formteil die Aufstiegsstufen eingeformt ausgebildet sind.

Um einen sicheren Aufstieg auf der Aufstiegsvorrichtung entsprechend den Sicherheitsnormen und -vorschriften zu gewährleisten, ist vorgesehen, dass neben den Aufstiegsstufen an der Abdeckeinrichtung zumindest ein Handhalteelement angeordnet ist.

In einer Ausgestaltung ist vorgesehen, dass die Aufstiegsstufen auf der Außenseite der Abdeckvorrichtung angeordnet sind.

In einer anderen Ausgestaltung ist vorgesehen, dass die Aufstiegsstufen auf der Innenseite der Abdeckvorrichtung angeordnet sind.

Eine einfache Anordnung und Verbringen der Abdeckvorrichtung in die jeweilige Position lässt sich dadurch erreichen, dass die Abdeckvorrichtung mittels zumindest einer Gelenkvorrichtung am Vorratsbehälter befestigt ist

Auch ist es möglich, um die Abdeckvorrichtung mit der Aufstiegsvorrichtung in die jeweils gewünschte Position zu verbringen, dass die Abdeckvorrichtung mittels eines Mehrgelenkgestänges an dem Vorratsbehälter befestigt ist.

Bei Vorratsbehältern mit großen Befüllöffnungen, die durch entsprechend große Abdeckvorrichtungen abgedeckt werden müssen, ist vorgesehen, dass die Abdeckeinrichtung aus zwei zumindest annähernd in der Mitte der Abdeckeinrichtung geteilten Abdeckelementen besteht, wobei jeweils ein Abdeckelement zu einer Seite seitlich neben dem Vorratsbehälter in eine aufrechte Stellung bringbar ist.

Auch ist es möglich, die Abdeckvorrichtung in eine aufrechte Position hinter oder vor dem Vorratsbehälter zu verbringen.

Weitere Einzelheiten der Erfindung sind der Beispielsbeschreibung und den Zeichnungen zu entnehmen. Hierbei zeigen
- Fig. 1: die als Zentrifugaldüngerstreuer ausgebildete Verteilmaschine mit den sich in Abdeckposition befindlichen als Deckelelemente ausgebildeten Abdeckelementen in perspektivischer Ansicht,
- Fig. 2: die Verteilmaschine gemäß Fig. 1, wobei die in Fahrtrichtung gesehen linke Hälfte der Abdeckeinrichtung in die die Befüllöffnung freigegebende Position geklappt ist,
- Fig. 3: die Verteilmaschine gemäß Fig. 1, wobei beide Hälften der Abdeckeinrichtung in die die Befüllöffnung freigegebenden Positionen geklappt sind und
- Fig. 4: eine weitere Verteilmaschine in perspektivischer Darstellung, wobei das in Fahrtrichtung gesehen linke Deckelelement in die die Behälteröffnung freigegebende Position geklappt ist.

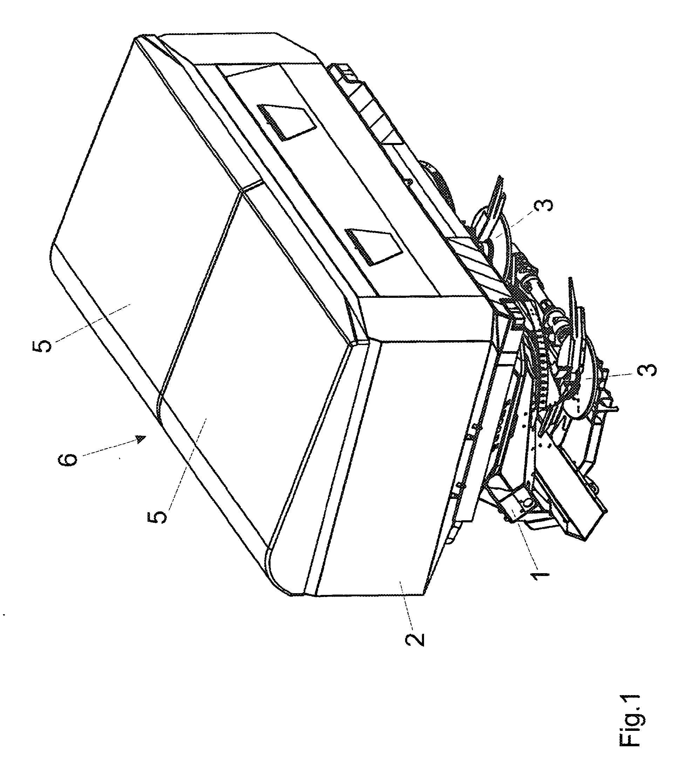

Die als Schleuderdüngerstreuer ausgebildete Verteilmaschine gemäß den Fig. 1 bis 3 weist einen mit einem Rahmen 1 ausgestatteten Vorratsbehälter 2 auf. Der Vorratsbehälter weist zwei Auslauftrichter auf, die durch Dosierelemente abgeschlossen sind. Unterhalb der Dosierelemente sind rotierend angeordnete Schleuderscheiben 3 angeordnet. Der Vorratsbehälter 2 weist eine obere Behälteröffnung 4 auf, über welche der Vorratsbehälter 2 mit dem auszubringenden Material befüllt wird. Die obere Behälteröffnung 4, die Befüllöffnung bildet, wird über die von den beiden Deckelelementen 5 gebildete Abdeckeinrichtung 6 abgedeckt, wie Fig. 1 zeigt. Hierdurch ist das sich in dem Vorratsbehälter 2 befindliche Material gegen Witterungseinflüsse, wie Regen etc. geschützt.

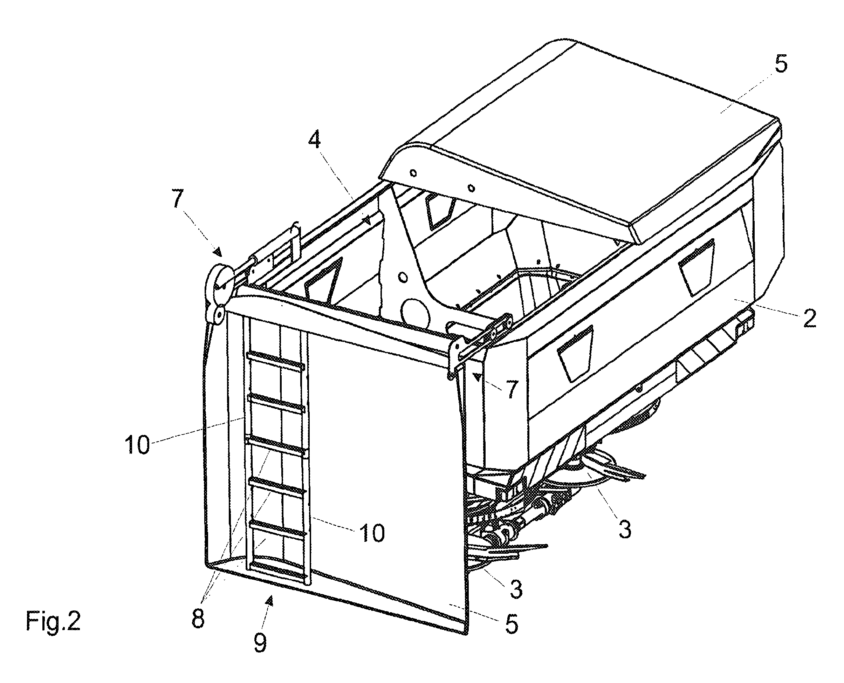

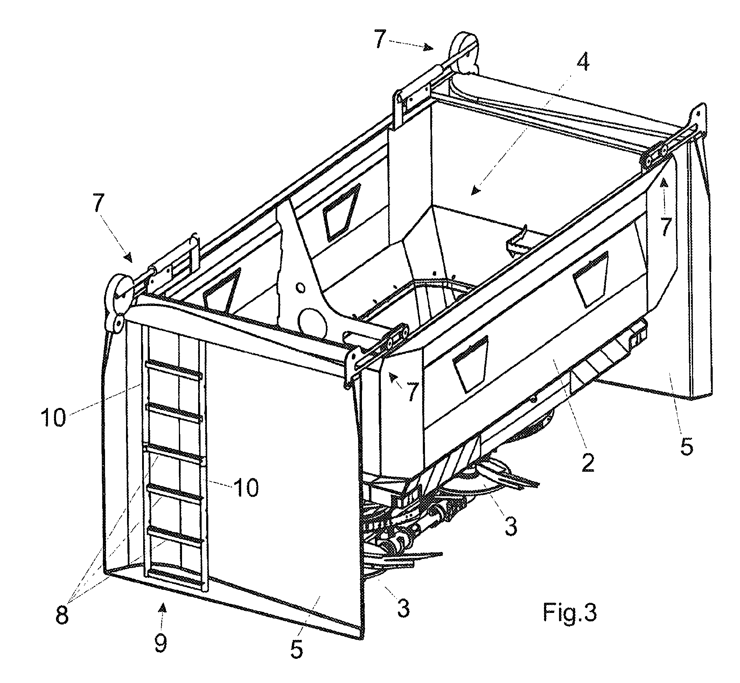

Die Abdeckeinrichtung 6 ist in der Mitte in zwei Abdeckelemente, die Deckelelemente 5 bilden, geteilt. Jedes Abdeckelement 5 ist mittels einer Gelenkvorrichtung 7, wie Fig. 2 und 3 zeigen an dem Vorratsbehälter 2 befestigt und jeweils seitlich neben dem Vorratsbehälter 2 in eine aufrechte Stellung zu bringen, wie die Fig. 2 und 3 zeigen.

Auf der Innenseite jedes Deckelelementes 5 sind Aufstiegsstufen 8 einer Aufstiegsvorrichtung 9 angeordnet. Es sind mehrere Aufstiegsstufen 8 in Leiterform übereinander angeordnet. Seitlich neben den Aufstiegsstufen 8 ist an der Abdeckeinrichtung 6 jeweils ein Handelement 10 angeordnet, welches von den aufrechten Elementen des Leiterelementes gebildet wird. Die Aufstiegsstufen 8 sind auf der Innenseite der Abdeckeinrichtung 6 angeordnet, wie die Fig. 2 und 3 zeigen. Die Abdeckeinrichtung 6 ist mit den Aufstiegesstufen 8 aus der die Behälteröffnung 4 abdeckenden Position, wie in Fig. 1 und 2 gezeigt, in welcher die Behälteröffnung 4 abgedeckt wird, in eine aufrechte Aufstiegsposition für die Aufstiegseinrichtung 9 zu bringen. Nach dem Befüllen des Vorratsbehälters 2 sind die Deckelelemente 5 der Abdeckeinrichtung 6 aus den in den Fig. 2 und 3 gezeigten Positionen in die in Fig. 1 und 2 gezeigten Positionen zu bringen, in welcher die Abdeckelemente 5 die Behälteröffnung 4 wieder abdecken.

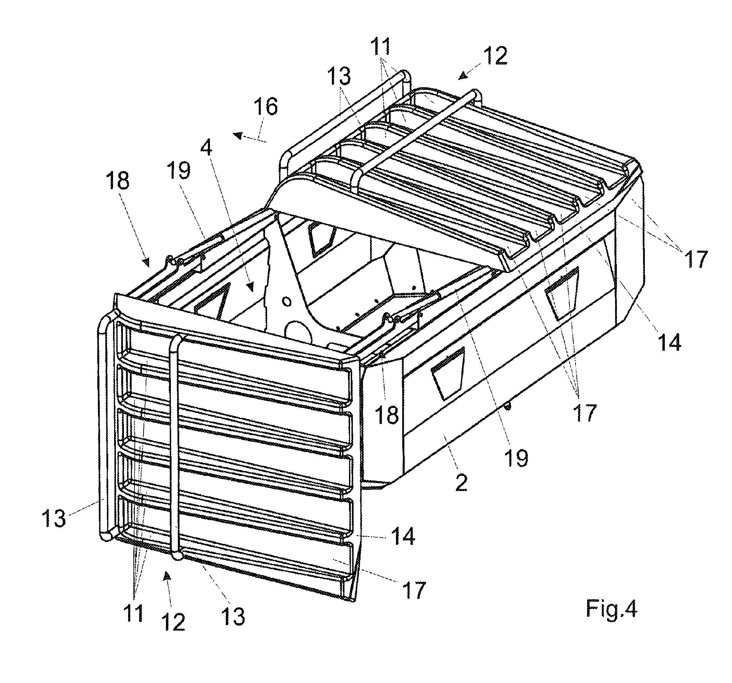

Die Ausgestaltung der Verteilmaschine gemäß Fig. 4 unterscheidet sich von der Verteilmaschine gemäß den Fig. 1 bis 3 dadurch, dass die Ausstiegsstufen 11 der Aufstiegsvorrichtung 12 mit den Handhaltelementen 13 auf der Außenseite der Deckelemente 14 der Abdeckvorrichtung 15 angeordnet sind. Diese Abdeckeinrichtung 15 ist, wie die Fig. 4 zeigt, als Formteil ausgebildet, wobei in dem Formteil die Aufstiegsstufen 11 in eingeformter Weise ausgebildet sind. Hierbei verlaufen die Aufstiegsstufen 11 über die gesamte in Fahrtrichtung 16 gesehene Tiefe der Deckelelemente 14 , damit bei Regen das Regenwasser wie bei einem Dach über die schräg nach hinten unten verlaufenden Flächen 17 nach außen ablaufen kann. Es ist auch noch möglich, weitere Handhalteelemente 13 an jedem Deckelelement 14 anzubringen.

Die Deckelelemente 14 gemäß dem Ausführungsbeispiel nach Fig. 4 sind mittels eines Mehrgelenkgestänges 18 an dem Vorratsbehälter 2 befestigt, um die gewünschte Klappbewegung der Deckelelemente 14 aus der die Behälteröffnung 4 abdeckenden Position in die Aufstiegsposition für das Aufstiegselement 12, wenn die Deckelelemente 14 seitlich neben dem Vorratsbehälter 2 befinden zu bringen. Hierbei können die Deckelelemente 14 von dem an dem Mehrgelenkgestänge 18 angreifenden motorischen Stellelement 19, beispielsweise einem Hydraulikzylinder oder Elektroantrieb, verschwenkt werden.

An Stelle die Abdeckelemente 5, 14 bzw. die Abdeckvorrichtung seitlich neben dem Vorratsbehälter 2 zu verschwenken, ist es selbstverständlich auch möglich, wenn die Maschine entsprechend ausgestaltet ist, die Abdeckeinrichtung 5, 14 mit den Aufstiegseinrichtungen 9, 12 in eine aufrechte Position vor oder hinter dem Vorratsbehälter 2 zu bringen.

## Patentansprüche

1. Landwirtschaftliche Verteilmaschine zum Ausbringen von insbesondere körnigen Materialien mit einem Rahmen (1), Vorratsbehälter (2) mit zumindest einer oberen als Befüllöffnung dienenden Behälteröffnung (4), zugeordneten Dosiervorrichtungen, Materialausbringelementen und zumindest einer mehrere Aufstiegsstufen (8) ausweisenden Aufstiegsvorrichtung (9), wobei dem Vorratsbehälter (2) zumindest eine Abdeckvorrichtung (5, 6, 14, 15) zur Abdeckung der Behälteröffnung (4) zugeordnet ist, **dadurch gekennzeichnet, dass** an der Abdeckeinrichtung (5, 6, 14, 15) mehrere Aufstiegsstufen (8, 11) der Aufstiegsvorrichtung (9, 12) angeordnet sind, dass die Abdeckvorrichtung (5, 6, 14, 15) mit den Aufstiegsstufen (8, 11) aus der die Behälteröffnung (4) abdeckenden Position in eine aufrechte Aufstiegsposition für die Aufstiegsvorrichtung (9, 12) und umgekehrt bringbar ist.

2. Verteilmaschine nach Anspruch 1, **dadurch gekennzeichnet, dass** die Abdeckeinrichtung (14) als Formteil ausgebildet ist, dass in dem Formteil die Aufstiegsstufen (11) eingeformt ausgebildet sind.

3. Verteilmaschine nach zumindest einem der vorstehenden Ansprüche, **dadurch gekennzeichnet, dass** neben den Aufstiegsstufen (8, 11) an der Abdeckeinrichtung (5, 6, 14, 15) zumindest ein Handhalteelement (10, 13) angeordnet ist.

4. Verteilmaschine nach zumindest einem der vorstehenden Ansprüche, **dadurch gekennzeichnet, dass** die Aufstiegsstufen (11) auf der Außenseite der Abdeckvorrichtung (14, 15) angeordnet sind.

5. Verteilmaschine nach zumindest einem der vorstehenden Ansprüche, **dadurch gekennzeichnet, dass** die Aufstiegsstufen (8) auf der Innenseite der Abdeckvorrichtung (5,6) angeordnet sind.

6. Verteilmaschine nach zumindest einem der vorstehenden Ansprüche, **dadurch gekennzeichnet, dass** die Abdeckvorrichtung (5, 6, 14, 15) mittels zumindest einer Gelenkvorrichtung (7, 18) am Vorratsbehälter (2) befestigt ist.

7. Verteilmaschine nach zumindest einem der vorstehenden Ansprüche, **dadurch gekennzeichnet, dass** die Abdeckvorrichtung (14, 15) mittels eines Mehrgelenkgestänges (18) an dem Vorratsbehälter (2) befestigt ist.

8. Verteilmaschine nach zumindest einem der vorstehenden Ansprüche, **dadurch gekennzeichnet, dass** die Abdeckeinrichtung (5, 6, 14, 15) aus zwei zumindest annähernd in der Mitte der Abdeckeinrichtung (6, 15) geteilten Abdeckelementen (5, 14) besteht, wobei jeweils ein Abdeckelement (5, 14) zu einer Seite seitlich neben dem Vorratsbehälter (2) in eine aufrechte Stellung bringbar ist.

9. Verteilmaschine nach Anspruch 1, **dadurch gekennzeichnet, dass** die Abdeckeinrichtung (6, 15) in eine aufrechte Position in Fahrtrichtung gesehen hinter dem Vorratsbehälter (2) bringbar ist.

10. Verteilmaschine nach Anspruch 1, **dadurch gekennzeichnet, dass** die Abdeckeinrichtung (6, 15) in eine aufrechte Position in Fahrtrichtung gesehen vor dem Vorratsbehälter (2) bringbar ist.

## Claims

1. Agricultural spreader for outputting in particular granular materials, with a frame (1), a storage container (2) with at least one upper container opening (4) serving as a filling opening, assigned metering devices, material output elements and at least one ascending device (9) having a plurality of ascending steps (8), wherein the storage container (2) is assigned at least one covering device (5, 6, 14, 15) for covering the container opening (4), **characterized in that** a plurality of ascending steps (8, 11) of the ascending device (9, 12) are arranged on the covering device (5, 6, 14, 15), and **in that** the covering device (5, 6, 14, 15) with the ascending steps (8, 11) can be brought from the position covering the container opening (4) into an upright ascending position for the ascending device (9, 12), and vice versa.

2. Spreader according to Claim 1, **characterized in that** the covering device (14) is in the form of a shaped part, and **in that** the ascending steps (11) are formed moulded into the shaped part.

3. Spreader according to at least one of the preceding claims, **characterized in that** at least one handhold element (10, 13) is arranged on the covering device (5, 6, 14, 15) next to the ascending steps (8, 11).

4. Spreader according to at least one of the preceding claims, **characterized in that** the ascending steps (11) are arranged on the outside of the covering device (14, 15).

5. Spreader according to at least one of the preceding claims, **characterized in that** the ascending steps (8) are arranged on the inside of the covering device (5, 6).

6. Spreader according to at least one of the preceding claims, **characterized in that** the covering device (5, 6, 14, 15) is fastened to the storage container (2) by means of at least one joint device (7, 18).

7. Spreader according to at least one of the preceding claims, **characterized in that** the covering device (14, 15) is fastened to the storage container (2) by means of a multi-joint linkage (18).

8. Spreader according to at least one of the preceding claims, **characterized in that** the covering device (5, 6, 14, 15) consists of two covering elements (5, 14) which are divided at least approximately in the centre of the covering device (6, 15), wherein in each case one covering element (5, 14) can be brought into an upright position on one side laterally next to the storage container (2).

9. Spreader according to Claim 1, **characterized in that** the covering device (6, 15) can be brought into an upright position behind the storage container (2), as seen in the direction of travel.

10. Spreader according to Claim 1, **characterized in that** the covering device (6, 15) can be brought into an upright position in front of the storage container (2), as seen in the direction of travel.

## Revendications

1. Épandeur agricole destiné à distribuer une matière notamment sous forme de grains, comprenant un châssis (1), un conteneur de stockage (2) comprenant au moins une ouverture de conteneur supérieure (4) servant d'ouverture de remplissage, des dispositifs de dosage associés, des éléments de distribution de matière et au moins un dispositif d'échelle (9) présentant plusieurs échelons (8), au moins un dispositif de recouvrement (5, 6, 14, 15) pour recouvrir l'ouverture de conteneur (4) étant associé au conteneur de stockage (2), **caractérisé en ce que** plusieurs échelons (8, 11) du dispositif d'échelle (9, 12) sont disposés sur le dispositif de recouvrement (5, 6, 14, 15), **en ce que** le dispositif de recouvrement (5, 6, 14, 15) peut être amené avec les échelons (8, 11) depuis la position recouvrant l'ouverture de conteneur (4) dans une position d'échelle verticale pour le dispositif d'échelle (9, 12) et inversement.

2. Épandeur selon la revendication 1, **caractérisé en ce que** le dispositif de recouvrement (14) est réalisé sous forme de pièce moulée, et **en ce que** les échelons (11) sont façonnés dans la pièce moulée.

3. Épandeur selon au moins l'une quelconque des revendications précédentes, **caractérisé en ce qu'**en plus des échelons (8, 11), au moins un élément de maintien (10, 13) est disposé sur le dispositif de recouvrement (5, 6, 14, 15).

4. Épandeur selon au moins l'une quelconque des revendications précédentes, **caractérisé en ce que** les échelons (11) sont disposés sur le côté extérieur du dispositif de recouvrement (14, 15).

5. Épandeur selon au moins l'une quelconque des revendications précédentes, **caractérisé en ce que** les échelons (8) sont disposés sur le côté intérieur du dispositif de recouvrement (5, 6).

6. Épandeur selon au moins l'une quelconque des revendications précédentes, **caractérisé en ce que** le dispositif de recouvrement (5, 6, 14, 15) est fixé au moyen d'au moins un dispositif articulé (7, 18) sur le conteneur de stockage (2).

7. Épandeur selon au moins l'une quelconque des revendications précédentes, **caractérisé en ce que** le dispositif de recouvrement (14, 15) est fixé sur le conteneur de stockage (2) au moyen d'une tringlerie à articulations multiples (18).

8. Épandeur selon au moins l'une quelconque des revendications précédentes, **caractérisé en ce que** le dispositif de recouvrement (5, 6, 14, 15) se compose de deux éléments de recouvrement (5, 14) au moins approximativement divisés au milieu du dispositif de recouvrement (6, 15), un élément de recouvrement (5, 14) pouvant à chaque fois être amené d'un côté latéralement à côté du conteneur de stockage (2) dans une position verticale.

9. Épandeur selon la revendication 1, **caractérisé en ce que** le dispositif de recouvrement (6, 15) peut être amené dans une position verticale, vu dans la direction de conduite, derrière le conteneur de stockage (2).

10. Épandeur selon la revendication 1, **caractérisé en ce que** le dispositif de recouvrement (6, 15) peut être amené dans une position verticale, vu dans la direction de conduite, avant le conteneur de stockage (2).
